**Europäisches Patentamt**

**European Patent Office**

**Office européen des brevets**

(11) Veröffentlichungsnummer: **0 497 230 A2**

# EUROPÄISCHE PATENTANMELDUNG

(21) Anmeldenummer: **92101198.7**

(22) Anmeldetag: **25.01.92**

(51) Int. Cl.5: **G11B 5/53, G11B 33/14**

(30) Priorität: **01.02.91 DE 4103030**

(43) Veröffentlichungstag der Anmeldung:
**05.08.92 Patentblatt 92/32**

(84) Benannte Vertragsstaaten:
**AT BE CH DE DK ES FR GB IT LI NL PT SE**

(71) Anmelder: **DEUTSCHE THOMSON-BRANDT GMBH**

**W-7730 Villingen-Schwenningen(DE)**

(72) Erfinder: **Gleim, Günter, Dipl.-Ing.**
**Oberer Sonnenbühl 22**
**W-7730 VS Villingen(DE)**
Erfinder: **Schandl, Hartmut, Dipl.-Ing.**
**Hasenleitengasse 94**
**A-1110 Wien(AT)**

(54) **Magnetbandgerät mit einer Kopftrommel.**

(57) 2.1. Es ist bekannt, bei einem handelsüblichen Magnetbandgerät mit einer von einem Motor antreibbaren Kopftrommel, die Kopftrommel mittels eines Heizelements zu beheizen, damit eine Betauung der Kopftrommel verhindert wird. Hierzu ist das Heizelement mittels einer metallenen Schelle am feststehenden Kopftrommelunterteil angeordnet. Aufgabe ist es, den Aufwand zum Schutz derartiger Kopftrommeln vor Betauung zu verringern.

2.2. Für die Beheizung der Kopftrommel (90), die mit dem Motor (M) eine mechanische Einheit bildet, wird der ohmische Widerstand des Wickeldrahtes der Motor-Wicklungsstränge (U, V, W) verwendet, indem diesen, in den durch Motorstillstand gekennzeichneten Gerätebetriebsarten ein Heizstrom (Gleichstrom) zugeführt wird. Die dabei erzeugt Wärme wird dann vom Motor (M) aus an die Kopftrommel (90) weitergeleitet.

2.3. Insbesondere Kopftrommel für einen Videorecorder

FIG. 3

Die Erfindung betrifft ein Magnetbandgerät zur Wiedergabe und/oder Aufnahme von Signalen mit einer drehbaren Kopftrommel.

Kopftrommeln handelsüblicher Magnetbandgeräte wie z.B. Videorecorder weisen jeweils ein antreibbares Kopfrad (upper drum) sowie ein feststehendes Unterteil (lower drum) auf. Am Umfang des Kopfrades sind Magnetköpfe angeordnet, welche zur Wiedergabe und/oder Aufnahme von Signalen mit einem in einer Kassette gelagerten Magnetband in Eingriff gebracht werden, indem, bei vorgegebener Positionierung der Kassette auf einem Laufwerkchassis, das Magnetband mit Hilfe von Fädelelementen zunächst aus der Kassette ausgefädelt und dann bei zu rotieren beginnendem Kopfrad um die Kopftrommel geschlungen wird. Der Kopfradantrieb erfolgt durch einen elektronisch geregelten Motor. Hierbei ist es üblich, das Kopfrad von der Motorwelle direkt anzutreiben, wozu Motor und Kopftrommel jeweils fest zu einer mechanischen Einheit zusammengefügt sind. Als Motoren werden heute fast ausschließlich bürstenlose Gleichstrommotoren mit einer elektronischen Kommutierungsschaltung für die Motor-Wicklungsstränge verwendet. Drehzahl und Phasenlage der Motorumdrehung werden bei konstanter Motorbetriebsspannung mittels einer in einer Regelschaltung gewonnenen Regelspannung eingestellt.

Bei raschen Umgebungstemperatur-Änderungen kann im Inneren des Magnetbandgerätes Taupunktunterschreitung und damit verbunden Kondensation von in der Luft vorhandenem Wasserdampf auftreten, wobei zwischen Luftfeuchtigkeit und Taupunkt bekanntlich folgender Zusammenhang besteht: Je größer die Luftfeuchtigkeit ist, desto höher liegt die Taupunkttemperatur. Speziell anfällig ist hierfür die auf dem Laufwerk des Magnetbandgerätes angeordnete Kopftrommel, da sie aus Aluminium gefertigt ist, das aufgrund seiner guten Wärmeleitfähigkeit eine Betauung (Feuchtigkeitsbeschlag) der Kopftrommeloberfläche begünstigt. Bei Inbetriebnahme des Magnetbandgerätes kann es infolge eines an der Kopftrommel vorhandenen Feuchtigkeitsbeschlages zu einem Kleben des Magnetbandes an der Kopftrommel kommen, was sowohl das Magnetband als auch die Magnetköpfe beschädigen kann. Außerdem beeinträchtigt ein Feuchtigkeitsbeschlag den Band/Kopf-Kontakt.

Es sind Videorecorder bekannt, bei denen zur Vermeidung dieser hauptsächlich in Gebieten mit hoher Luftfeuchtigkeit bestehenden Gefahr die Kopftrommel mittels eines im Bereich der Kopftrommel angeordneten Heizelementes beheizt wird. Dieses Heizelement besteht im allgemeinen aus einem als Kaltleiter (PTC-Widerstand) ausgebildeten temperaturabhängigen Widerstand mit einer bei etwa 50° C liegenden Bezugstemperatur, ab der ein annähernd sprunghafter, die Aufheizung begrenzender Widerstandswert-Anstieg einsetzt. Um die Kopftrommel taufrei zu halten bzw. einen eventuell vorhandenen Feuchtigkeitsbeschlag, der sich z.B. während einer Geräte-Netzabtrennung gebildet haben kann, aufzulösen, ist im sogenannten "standby mode", in den ein derartiger Videorecorder beim Anschließen an das Netz automatisch geschaltet wird und der dem ausgeschalteten Zustand entspricht, das Heizelement aktiv geschaltet. Die Energieversorgung des Heizelementes erfolgt über ein Verbindungskabel von einer im Netzteil des Gerätes befindlichen Spannungsquelle aus. Im Aufnahme- und Wiedergabebetrieb ist das Heizelement jedoch ausgeschaltet, da hierbei Magnetbandumschlingung der Kopftrommel und Rotation des Kopfrades eine Betauung der Kopftrommel verhindern. Hierzu dient ein elektronischer Schalter, der von einer mit dem Bedienteil des Gerätes kommunizierenden Schaltung entsprechend gesteuert wird.

Das Heizelement ist üblicherweise mittels einer metallenen Schelle am Umfang des feststehenden Kopftrommelunterteils befestigt. Zur Befestigung sowie zum elektrischem Anschluß sind mehrere manuelle Tätigkeiten notwendig. Die Übertragung der von dem Heizelement erzeugten Wärme erfolgt im wesentlichen durch Wärmeleitung an das Kopftrommelunterteil und von dort aus durch Konvektion an das drehbare Kopfrad.

Es ist Aufgabe der Erfindung, den Aufwand zum Schutz derartiger Kopftrommeln vor Betauung zu verringern.

Diese Aufgabe wird erfindunsgemäß durch die im Anspruch 1 angegebenen Merkmale gelöst. Vorteilhafte Weiterbildungen sind in den Unteransprüchen angegeben.

Der Erfindung liegt die Idee zugrunde, zur Wärmeerzeugung (Joulsche Stromwärme) für die Beheizung der Kopftrommel, den ohmschen Widerstand des Wickeldrahtes der Motor-Wicklungsstränge zu verwenden, indem diesen, in den durch Motorstillstand gekennzeichneten Gerätebetriebsarten, Strom (Gleichstrom), im folgenden Heizstrom genannt, zugeführt wird. Der Heizstrom kann dabei z.B. über steuerbare, im Zuge der Stromversorgungsleitungen der Wicklungsstränge anzuordnende elektronische Umschalter den Wicklungssträngen zugeführt werden. Das hat den Vorteil, daß das Heizelement eingespart werden kann.

Die Wicklungsstränge eines derartigen Motors setzen sich beispielsweise aus einzelnen Spulen zusammen, welche am Umfang eines aus geschichteten Eisenblechen bestehenden ringförmigen Statorpaketes angeordnet sind. Das Statorpaket ist üblicherweise mit dem feststehenden Kopftrommelunterteil und/oder mit einem Achslagergehäuse mechanisch fest verbunden, welches im Kopftrommelunterteil ausgebildet ist und in den Motorraum hineinreicht, so daß die in den Wicklungssträngen erzeugte Stromwärme vom Statorpaket aus auf einfache Weise an die Kopftrommel weitergeleitet wird.

In dem Achslagergehäuse ist die Motorwelle drehbar gelagert, wobei der aus dem Achslagergehäuse nach oben herausstehende Teil der Motorwelle mit dem Magnetköpfe tragenden Kopfrad der Kopftrommel fest verbunden ist, während der aus dem Achslagergehäuse nach unten herausstehende Teil der Motorwelle mit dem Rotor des Motors fest verbunden ist. Im Rotor sind einzelne Feldmagnete in ebenfalls vorgegebener Anzahl ringförmig angeordnet. Diese stehen mit einem Luftspalt als Abstand den vorgenannten Spulen der Wicklungsstränge gegenüber.

Die Wicklungsstränge sind an einem innerhalb des Motors befindlichen Teilbereich einer ortsfesten Leiterplatte elektrisch angeschlossen. Der außerhalb des Motors befindliche Teilbereich der Leiterplatte enthält üblicherweise einen oder mehrere mit dem Motor mechanisch verkoppelte Sensoren (pick-up) zur Gewinnung von Motorregelgröße einerseits und von Kommutierungs-Steuersignalen für die Kommutierungsfolge der Wicklungsstränge andererseits sowie elektronische Schaltungselemente zur elektronischen Kommutierung der Wicklungsstränge. Entsprechende elektrische Verbindungen für die Motorregelschaltung sowie für die Zuführung von Betriebsspannungen werden mittels auf der Leiterplatte vorgesehener Anschlüsse hergestellt.

Damit besteht der Vorteil, daß sich der Heizstrom mittels einer von der Leiterplatte zugeführten Betriebsspannungen auf einfache Weise erzeugen läßt. Der Heizstrom kann dabei z.B. in Abhängigkeit von der Motortemperatur gesteuert werden. Dazu wird der jeweilige Schaltkontakt vorgenannter Umschalter für die Heizstromzufuhr beispielsweise über ein gemeinsames temperaturempfindliches Schaltelement mit der für die Heizstromerzeugung vorgesehenen Betriebsspannung elektrisch verbunden.

Erzeugung und Steuerung des Heizstromes für die Kopftrommelbeheizung kann auch auf die nachfolgend beschriebene Weise realisiert werden. Diese, zu der nachfolgend zunächst das Zusammenwirken von Motor mit einer beispielhaften Kommutierungschaltung erläutert wird, beruht auf der Überlegung, neben den Wicklungssträngen weitere Schaltungselemente der Motorregelschaltung für den Heizbetrieb zu nutzen.

Zur Erzeugung eines magnetischen Drehfeldes bzw. eines Drehmomentes für den Antrieb des Kopfrades müssen die feststehenden Wicklungsstränge zyklisch mit Strom versorgt werden. Dies geschieht mit Hilfe des als Kommutierungsschaltung ausgebildeten Teils der Motorregelschaltung, der dabei von den Kommutierungs-Steuersignalen gesteuert wird. Die Kommutierungsschaltung schaltet immer jene Wicklungsstränge ein, die gegenüber den mit dem Rotor umlaufenden Feldmagneten eine für die Drehmomentenbildung günstige Stellung haben. Bei konstanter Motorbetriebsspannung wird die Größe der dabei durch die jeweiligen Wicklungsstränge fließenden Ströme von der Motorregelspannung bestimmt, indem diese den Wicklungssträngen zugeordnete, im Schaltbetrieb arbeitende Endstufen der Kommutierungsschaltung entsprechend aussteuert. Jede dieser Endstufen, die als Verstärker ausgebildet sind, weist zu diesem Zweck getrennte Steuereingänge für Regelspannung und Schaltsignale auf. Die Schaltsignale bestehen aus einer Folge rechteckförmiger Impulse mit abwechselndem L-Pegel und H-Pegel.

Eine Motorumdrehung ist in mehrere, durch die Polanzahl des Motors vorgegebene Kommutierungsschritte (Abstand zwischen zwei Kommutierungen) unterteilt. Bei einem dreisträngigen Motor z.B. ist bekanntlich jeder der Kommutierungsschritte dadurch gekennzeichnet, daß jeweils zwei seiner Wicklungsstränge eingeschaltet sind, während ein dritter abgeschaltet ist. Dabei wird z.B. die Einschaltung mittels des H-Pegels und die Abschaltung mittels des L-Pegels des Schaltsignals bewirkt.

Im "standby mode" und "stop mode" des Gerätes wird keine Regelspannung erzeugt, so daß die Regelspannungs-Steuereingänge praktisch Bezugspotential führen. Dieses hat die Sperrung der Endstufen und damit den beabsichtigten Motorstillstand zur Folge.

Dadurch, daß der Motorstillstand durch die Ansteuerung der Endstufen über die Regelspannungs-Steuereingänge bewirkt wird, kann in den durch Motorstillstand gekennzeichneten Gerätebetriebsarten der Schaltsignale erzeugende Teil der Kommutierungsschaltung zum Zweck der Heizstromgewinnung mittels der Endstufen angeschaltet bleiben. Bleibt nämlich der Schaltsignale erzeugende Teil der Kommutierungsschaltung angeschaltet, bleiben z.B. auch jeweils die mit dem letzten Kommutierungsschritt des vorausgegangen Motorbetriebes erzeugten Schaltsignalpegel an den Schaltsignal-Steuereingängen der Endstufen bestehen. Beim Anschließen des Gerätes an das Netz werden automatisch einem beliebigen Kommutierungsschritt gemäße Schaltsignalpegel neuerzeugt.

Die vorgenannte Maßnahme hat den Vorteil, daß mittels einer bei Motorstillstand den Regelspannungs-Steuereingängen zugeführten einstellbaren Gleichspannung der Heizstrom erzeug- und einstellbar ist und keine im Zuge der Versorgungsleitungen der Wicklungsstränge anzuordnende Umschalter benötigt werden. Dabei wird allerdings vorausgesetzt, daß ein Weiterschalten der Schaltsignalpegel durch den Kommutierungssteuersignale (Impulse) erzeugenden Teil der Motorregelschaltung verhindert wird, damit beim Umschalten vom Motorbetrieb in den Heizbetrieb ein Anlaufen des Motors durch eine umschaltbedingte Anruckbewegung des Rotors ausgeschlossen ist. Das Weiterschalten der Schaltsignalpegel kann beispielsweise dadurch verhindert werden, daß Kommutierungssteuersignale nicht weitergeleitet werden und/oder, daß die erwähnten Sensoren zur Gewinnung von Kommutierungssteuersignalen außer Betrieb geschaltet werden.

Bei Verwendung eines als Lichtschranke ausgebildeten Sensors zur Gewinnung von Kommutierungssteuersignalen und/oder Motorregelgröße geschieht eine derartige Abschaltung zwangsläufig, weil nämlich in den durch Motorstillstand gekennzeichneten Gerätebetriebsarten das Lichtemissionselement der Lichtschranke abgeschaltet ist, denn die Lebensdauer einer derartigen Lichtschranke hängt bekanntlich im wesentlichen vom Betrieb ihres Lichtemissionselementes ab.

Mit der zu dem genannten Zweck verwendeten Lichtschranke ergibt sich zudem der Vorteil, daß die Schaltungsmittel zur Abschaltung des Lichtemissionselementes für die Ein- und Abschaltung des Heizbetriebes genutzt werden können.

Wie aus der Erläuterung der Arbeitsweise der elektronischen Kommutierung, insbesondere anhand des dreisträngigen Motors, hervorgeht, sind während eines Kommutierungsschrittes nicht sämtliche Wicklungsstränge eingeschaltet bzw. stromführend. Demzufolge können bei einem derartigen Konzept für den Heizbetrieb auch nicht sämtliche Wicklungsstränge zugleich stromführend sein. Um dafür aber eine im Durchschnitt gleichmäßige Beteiligung aller Wicklungsstränge an der beabsichtigten Wärmeerzeugung zu erreichen, ist in einer vorteilhaften Weiterbildung dieses Konzeptes vorgesehen, während der durch Motorstillstand gekennzeichneten Gerätebetriebsarten in vorgebbaren Zeitabständen Kommutierungen auszulösen, indem dem Schaltsignale erzeugenden Teil der Kommutierungsschaltung jeweils nach Ablauf einer beliebig vorgebbaren Zeitspanne ein Steuerimpuls zugeführt wird. Mit jedem dieser Steuerimpulse ist eine Kommutierung um jeweils einen Kommutierungsschritt bewirkbar. Derartige Steuerimpulse lassen sich mit Hilfe eines Impulsgenerators erzeugen. Ein solcher Impulsgenerator kann z.B. Teil einer Motoranlaufschaltung sein, dessen Frequenz für den Heizbetrieb entsprechend umschaltbar ist. Zur Frequenzumschaltung oder für die Einschaltung eines seperaten Impulsgenerators lassen sich die Schaltmittel des Lichtemissionselementes der Lichtschranke in vorteilhafter Weise verwenden.

Zur Gewinnung einer für den Heizbetrieb den Regelspannungs-Steuereingängen zuzuführenden Stellgröße wird vorzugsweise eine elektronische Schaltung verwendet, die im wesentlichen aus einem Temperaturregler mit einem temperaturgesteuerten Halbleiterelement (Transistor oder Diode) als Fühler besteht. Ein derartiger Regler mit einem Temperaturfühler, z.B. zur Kristalltemperatur-Regelung in einem integrierten Schaltkreis, ist aus dem hochkonstanten Spannungsstabilisator TCA 530 (VALVO) für Abstimmdioden bekannt. Diese Schaltung oder zumindest der Fühler dieser Schaltung wird so auf der Motorleiterplatte angeordnet, daß ein ausreichender Wärmekontakt mit den Wicklungssträngen besteht.

Die Konzepierung mit einer derartigen Schaltung hat den Vorteil, daß sich Kommutierungsschaltung und Schaltungsmittel zur Abschaltung des Lichtemissionselementes sowie für den Heizbetrieb zusätzlich erforderliche Schaltungsmittel platzsparend in einem gemeinsamen, sogenannten Motorschaltkreis integrieren lassen.

Als vorteilhafte Schaltungsvariante ist auch eine Ausführung denkbar, bei der, während der durch Motorstillstand gekennzeichneten Gerätebetriebsarten, jedem der Schaltsignal-Steuereingänge der Endstufen gleichzeitig ein einschaltender Signalpegel zugeführt wird, wodurch die zuvor erläuterte Kommutierung während des Heizbetriebes nicht benötigt wird. Die Zuführung des einschaltenden Signalpegels läßt sich z.B. mit Hilfe von in den Schaltsignalwegen der Endstufen anzuordnender elektronischer Umschalter realisieren.

Zur weiteren Erläuterung der Erfindung werden im folgenden mehrere Ausführungsbeispiele anhand der Zeichnungen beschrieben. Diese zeigen in

Fig. 1    im vergrößerten Maßstab eine bekannte Kopftrommel für einen VHS-Videorecorder in Vorderansicht,

Fig. 2a    im gleichen vergrößerten Maßstab eine Kopftrommel gemäß Fig. 1 in Vorderansicht in Kombination mit einem in einem Teilschnitt dargestellten bürstenlosen Gleichstrommotor und einer beispielhaften Anordnung des Temperaturfühlers,

Fig. 2b    im gleichen vergrößerten Maßstab einen Teil des Motors gemäß Fig. 2a in unterer Ansicht,

Fig. 3    ein Prinzip-Schaltbild einer Schaltung zur Rege lung des Motors gemäß Fig. 2a in Verbindung mit Schaltungselementen für die erfindungsgemäße Wärmeerzeugung,

Fig. 4    eine Abwandlung der Schaltung gemäß Fig. 3,

Fig. 5    eine Motorschaltung für die Verwendung in einer Schaltung nach Fig. 3 oder Fig. 4.

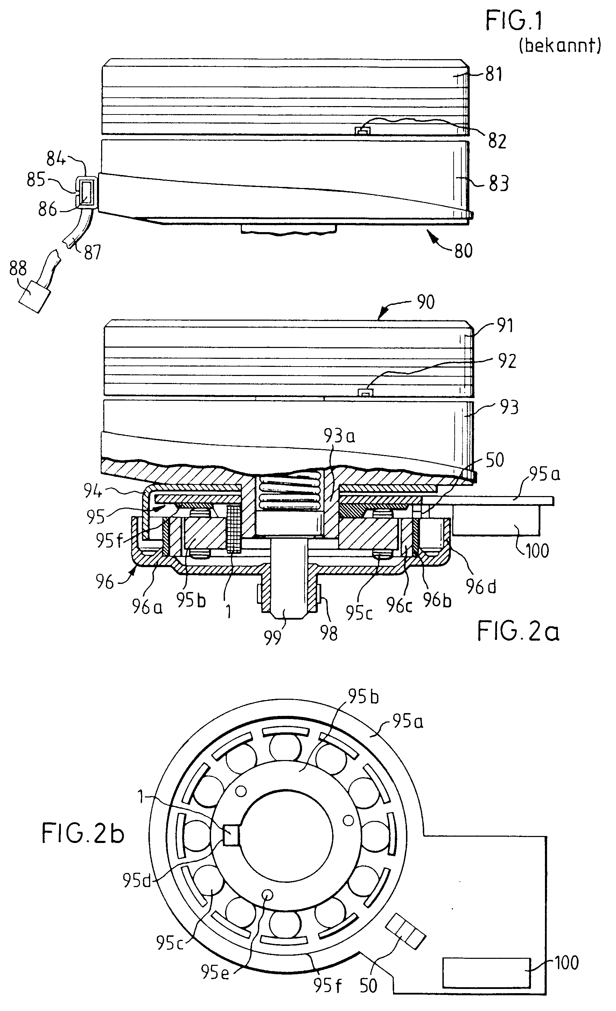

Fig. 1 zeigt eine bekannte Kopftrommel 80 mit einem Heizelement 86. Die Kopftrommel 80 besteht aus einem drehbaren, Magnetköpfe 82 tragenden Kopfrad 81 und einem feststehenden Kopftrommelunterteil 83. Das Heizelement 86 ist als PTC-Widerstand ausgebildet, welcher, von einem elektrisch isolierenden Schlauch 85 umhüllt, über eine ihn umspannende metallene Schelle 84 am Kopftrommelunterteil 83 lösbar befestigt ist. Ein an dem Heizelement 86 angeschlossenes, einen Steckverbinder 88 aufweisendes Verbindungskabel 87 dient dabei zur elektrischen Stromversorgung vom Gerätenetzteil aus.

Fig. 2a zeigt eine weitere Kopftrommel 90 in Kombination mit einem bürstenlosen, in einem Teilschnitt dargestellten Gleichstrommotor, in dem ein als Halbleiterelement ausgebildeter Temperaturfühler 1 und dessen Einbaulage im Stator 95 des Motors erkennbar sind. Die Kopftrommel 90 besteht aus einem drehbaren, Magnetköpfe 92 tragenden Kopfrad 91 und einem feststehenden Kopftrommelunterteil 93. Der Stator 95 besteht aus einem aus Eisenblechen zusammengesetzten Statorpaket 95b mit elektronisch kommutierbaren Spulen 95c.

Der Stator 95 ist zusammen mit einer Motorleiterplatte 95a und einem Motorgehäuse 94 mit der Kopftrommel 90 mechanisch fest verbunden. Dabei wird der Temperaturfühler 1 zum einen von dem Statorpaket 95b formschlüssig umfaßt, und zum anderen liegt er an einem Achslagergehäuse 93a an, das im Kopftrommelunterteil 93 ausgebildet ist und in den Motorraum hineinreicht. In dem Achslagergehäuse 93a ist eine Motorwelle 99 drehbar gelagert, wobei der aus dem Achslagergehäuse 93a nach oben herausstehende Teil von Motorwelle 99 mit dem Magnetköpfe 92 tragenden Kopfrad 91 fest verbunden ist, während der aus dem Achslagergehäuse 93a nach unten herausstehende Teil von Motorwelle 99 mit dem Rotor 96 fest verbunden ist. Der Rotor 96 besteht aus einem kreisförmigen Profilteil 96a, auf dem gleichmäßig auf einem Radius verteilte, von einem Weicheisenring 96b umspannte Feldmagnete 96c angeordnet sind. Die Feldmagnete 96c stehen den Spulen 95c mit einem Luftspalt als Abstand gegenüber. Der Rotor 96 ist mittels eines das Profilteil 96a umspannenden Federringes 98 an der Motorwelle 99 befestigt. Das Profilteil 96a besteht aus lichtdurchlässigem Kunststoff. Auf dem ringförmig ausgebildeten Umfang 96d von Profilteil 96a, der in den Spalt einer Gabellichtschranke 50 eintaucht, sind lichtundurchlässige Strichmarkierungen unterschiedlicher Breite angebracht. Bei rotierendem Motor werden durch die Strichmarkierungen in der Gabellichtschranke 50 Impulse (Signale) erzeugt, aus deren Folge Kommutierungs-Steuersignale und Regelgröße zur Regelung des Motors nach Drehzahl und Phasenlage ableitbar sind. Die Gabellichtschranke 50 ist in einer festen Zuordnung zu den Spulen 95c auf der Leiterplatte 95a angeordnet.

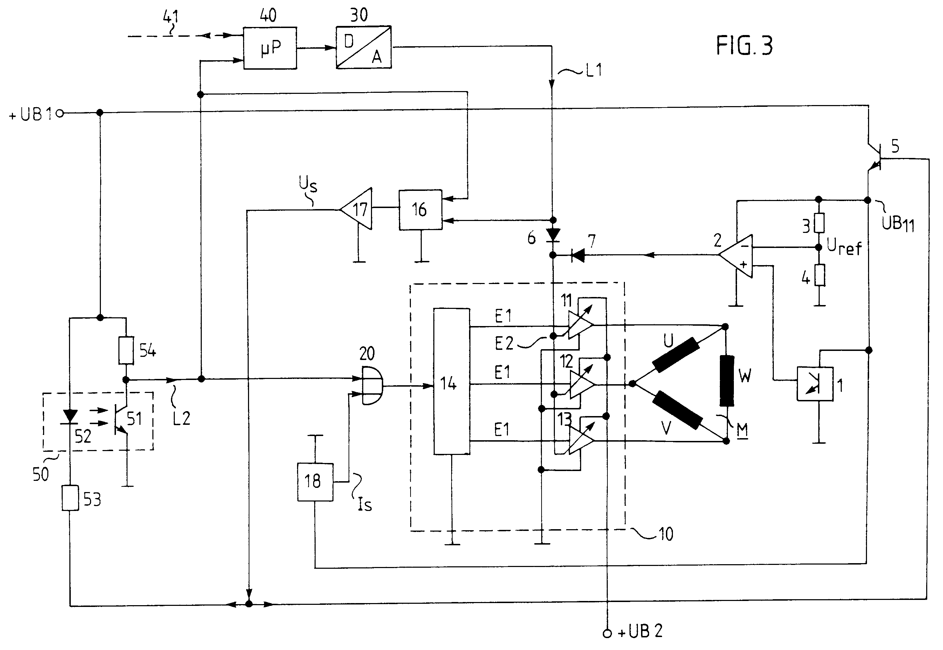

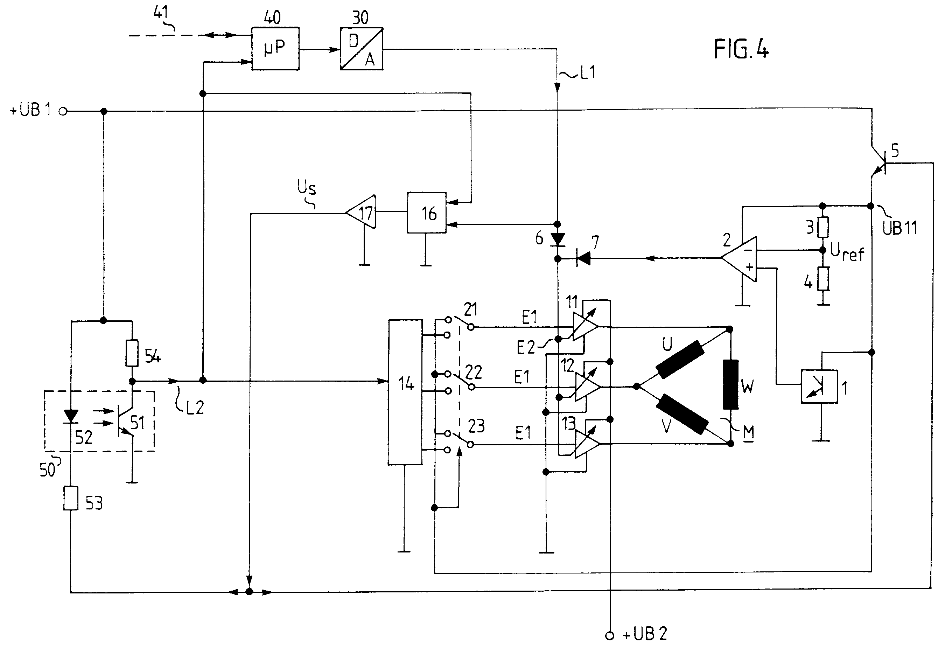

Fig. 2b zeigt die Motorleiterplatte 95a in unterer Ansicht. Das Statorpaket 95b, das über ein kunststoffartiges Abstandselement 95f auf der Motorleiterplatte 95a angeordnet ist, weist eine dem Temperaturfühler 1 angepaßte Ausnehmung 95d auf. Von den auf dem Statorpaket 95b angeordneten Spulen 95c sind jeweils vier zu einem von in Fig. 3, Fig. 4 und Fig.5 dargestellten Wicklungssträngen U, V, W zusammengeschaltet. Auf dem außerhalb des Motorbereiches sich befindlichen Teilbereiches der Motorleiterplatte 95a sind neben der Gabellichtschranke 50 und einem Steckverbinder 100 Schaltungselemente angeordnet: für die Kommutierung der Wicklungstränge U, V, W sowie für einen Temperaturregler 2 für die erfindungsgemäße Wärmeerzeugung zur Beheizung von Kopftrommel 90 und für einen steuerbaren elektronischen Schalter 5 zur Ein- und Abschaltung des Heizbetriebes. Temperaturregler 2, elektronischer Schalter 5 und eine Kommutierungsschaltung 10, die zusammen mit der Gabellichtschranke 50 einen Teil einer Motorregelschaltung bildet, sind in Fig. 3 und Fig. 4 dargestellt.

Elektrische Verbindungen, einerseits für die Zusammenschaltung mit dem im Gerät angeordneten Teil der Motorregelschaltung andererseits für die Zuführung von Betriebsspannungen aus dem Gerätenetzteil, werden mittels eines an dem Steckverbinder 100 anschließbaren Verbindungskabels hergestellt.

Fig. 3 zeigt die Motorregelschaltung in Verbindung mit Temperaturregler 2, Temperaturfühler 1 und elektronischem Schalter 5 sowie mit einem Impulsgenerator 18 zur Erzeugung von Steuerimpulsen Is für die erwähnte Kommutierung der Wicklungsstränge U, V, W während des Heizbetriebes. Die in vorgebbaren Zeitabständen erzeugbaren Steuerimpulse Is werden über eine ODER-Schaltung 20 dem Schaltsignale erzeugenden Teil 14 der Kommutierungschaltung 10 zugeführt. Den Wicklungssträngen U, V, W, die zu einer Dreieckschaltung zusammengeschaltet sind, sind in der Kommutierungsschaltung 10 befindliche, im Schaltbetrieb arbeitende Endstufen 11-13 zugeordnet.

Über den elektronischen Schalter 5 werden Temperaturregler 2, Temperaturfühler 1 und Impulsgenerator 18 mit Betriebsspannung (+UB11) versorgt. Der elektronische Schalter 5 ist ein als Emitterfolger betriebener NPN-Transistor, dessen Kollektor mit einer positiven Betriebsspannung +UB1 verbunden ist.

Der Temperaturregler 2 ist als Differenzverstärker ausgebildet. Dessen invertierendem Steuereingang wird im Heizbetrieb eine Referenzspannung Uref zugeführt, die mittels eines Spannungsteilers erzeugt wird, der zwischen Bezugspotential (Masse) und Emitter von Transistor 5 geschaltet ist und aus zwei, in Serie geschalteten Widerständen 3, 4 besteht. Der nichtinvertierende Steuereingang ist mit dem Signalausgang von Temperaturfühler 1 verbunden. Der Temperaturfühler 1 ist im Prinzip ein temperaturgesteuerter, in Emitterschaltung betriebener Transistor.

Die Motorregelschaltung weist einen Mikroprozessor 40, im folgenden µP genannt, mit einem ihm nachgeschalteten D/A-Wandler 30 auf. Der µP 40 ist über eine Datenbusleitung 41 mit dem Gerätebedienteil (nicht dargestellt) verbunden. Über den µP 40 ist die Motorregelschaltung aktivierbar. Während des Motorbetriebes arbeitet der uP 40 als Regler.

Die Endstufen 11-13 werden mit einer positiven Betriebsspannung +UB2 versorgt. Zu diesem Zweck sind die Endstufen 11-13 mit ihren Versorgungsanschlüssen zwischen Betriebsspannung +UB2 und Masse geschaltet. Die Endstufen 11-13 sind als steuerbare Verstärker ausgebildet. Diese weisen je zwei Steuereingänge E1 und E2 auf, wobei jeweils ein erster Eingang E1 mit einem ihm zugeordneten Signalausgang des Schaltsignale erzeugenden Teils 14 der Kommutierungsschaltung 10 verbunden ist. Der Schaltsignale erzeugende Teil 14 ist als Schaltwerk ausgebildet. Die zweiten Eingänge E2 der Endstufen 11-13 sind parallelgeschaltet. Über eine erste Diode 6 sind die zweiten Eingänge E2 der Endstufen 11-13 mit einer Signalleitung L1 sowie mit einem ersten Signaleingang eines zweiten Schaltwerkes 16 verbunden. Die Signalleitung L1 stellt dabei die Verbindung mit dem Signalausgang von D/A-Wandler 30 her. Über eine zweite Diode 7 sind die zweiten Eingänge E2 der Endstufen 11-13 mit dem Signalausgang des Temperaturreglers 2 verbunden. Das zweite Schaltwerk 16 steuert mittels eines ihm nachgeschalteten Schaltverstärkers 17 die Gabellichtschranke 50 und den elektronischen Schalter 5.

Den parallelgeschalteten Steuereingängen E2 der Endstufen 11-13 werden im Falle des Motorbetriebes die Stellgröße für die Motorregelung und im Falle des Heizbetriebes die Stellgröße für die Wärmeerzeugung zugeführt, wobei die Dioden 6 und 7 für eine gegenseitige Entkopplung beider Regler 2, 40 sorgen.

Die Gabellichtschranke 50 besteht aus einem Phototransistor 51 und einer LED 52. Die Anode von LED 52 liegt an der positiven Betriebsspannung +UB1. Die Kathode von LED 52 ist über einen Vorwiderstand 53 zum einen mit dem Ausgang von Schaltverstärker 17 und zum anderen mit dem Steuereingangang (Basis) von Schalter 5 verbunden. Der Emitter von Phototransistors 51 liegt an Masse. Der Kollektor von Phototransistor 51, der über einen Arbeitswiderstand 54 mit der positiven Betriebsspannung +UB1 verbunden ist, bildet den Signalausgang der Gabellichtschranke 50. Dieser ist über eine Signalleitung L2 mit einem Signaleingang von ODER-Schaltung 20 und mit einem Dateneingang von µP 40 sowie mit einem zweiten Signaleingang von Schaltwerk 16 verbunden. Die Betriebsspannung +UB1 dient außerdem zur Versorgung der beiden Schaltwerke 14, 16 und des Schaltverstärkers 17 sowie der ODER-Schaltung 20.

Die Motorregelschaltung arbeitet mit den Schaltungselementen für die Wärmeerzeugung wie folgt zusammen: Zur Abschaltung bzw. zur Einschaltung von LED 52 werden von dem zweiten Schaltwerk 16 beide Signalleitungen L1, L2 abgefragt. Führt dabei keine der beiden Signalleitungen L1, L2 Signale, sperrt das zweite Schaltwerk 16 den Schaltverstärker 17 bzw. dessen Ausgangswiderstand wird so hochohmig, daß die Basis von Transistor 5 praktisch mit dem positiven Potential der Betriebsspannung +UB1 angesteuert wird. Der Ausgang von Transistor 5 wird hierdurch auf ein positives Potential geschaltet, das der um die Durchlaßspannung (UBE) der Basis-Emitter-Strecke verminderten Betriebsspannung +UB1 entspricht und als Betriebspannung +UB11 für Temperaturregler 2, Temperaturfühler 1 und Impulsgenerator 18 sowie zur Erzeugung der Referenzspannung Uref dient. Der Temperaturfühler 1, bei dem die Temperaturabhängigkeit seines Kollektorreststromes (Icbo) zur Bestimmung der Regelgröße für den Heizbetrieb genutzt wird, erzeugt an seinem Signalausgang eine Spannung, die in Bezug auf Masse mit zunehmender Motortemperatur abnimmt. Diese von Motortemperatur abhängige Spannung wird mit der Referenzspannung Uref verglichen. Entsprechend der sich hieraus ergebenden Spannungsdifferenz steuert der Temperaturregler 2 dann die Endstufen 11-13 an, wobei die Diode 6 eine Einwirkung auf das zweite Schaltwerk 16 verhindert.

Es erzeugen dabei allerdings nur diejenigen der Endstufen 11-13 Heizstrom, an deren Steuereingang E1 gerade ein einschaltender, mittels Impulsgenerator 18 und Schaltwerk 14 gewonnener Signalpegel anliegt.

Führt dagegen eine oder jede der beiden Signalleitungen L1, L2 Signale, steuert das zweite Schaltwerk 16 den Schaltverstärker 17 an. Der damit verbundene leitende Arbeitszustand von Schaltverstärker 17 hat die Durchschaltung von LED 52 zur Folge. Das dabei erzeugte Potentialgefälle (Schaltspannung Us) bewirkt die Sperrung von Transistor 5 und damit die Abschaltung von Temperaturregler 2, Temperaturfühler 1 und Impulsgenerator 18. Durch die Diode 7 wird eine Einflußnahme seitens des Temperaturreglers 2 auf die Motorregelung verhindert.

Signale auf den Signalleitungen L1, L2 werden wie folgt erzeugt: Beim Start des Aufnahme- oder Wiedergabebetriebes gibt der µP 40 zunächst ein Startsignal (Impuls) aus. Das Startsignal wird in der D/A-Wandlerschaltung 30 in ein analoges Startsignal umgewandelt, welches über die Signalleitung L1 den parallelgeschalteten Eingängen E2 der Endstufen 11-13 sowie dem ersten Steuereingang des zweiten Schaltwerkes 16 zugeführt wird. Das analoge Startsignal bewirkt dabei sowohl das Anlaufen von Motor M (allein oder mit Hilfe einer Anlaufschaltung) als auch das Einschalten von LED 52. Bei rotierendem Motor M werden mit Hilfe der am erwähnten Rotorumfang angebrachten Strichmarkierungen in der Gabellichtschranke 50 Signale (Impulse) erzeugt, welche über die Signalleitung L2 dem Schaltwerk 16, dem µP 40 sowie über ODER-Schaltung 20 dem Schaltwerk 14 zur Auswertung zugeführt werden. Aus der Folge dieser Signale gewinnt der µP 40 die Regelgröße für die Motoregelung. Das erste Schaltwerk 14 erzeugt aus diesen Signalen Schaltsignale, die die Endstufen 11-13 für die Kommutierungsfolge der Wicklungssträne U, V, W zyklisch schalten. Der µP 40 vergleicht die Regelgröße mit einer vorgegeben Führungsgröße und gibt als Ergebnis des Vergleichs ein pulsweitenmoduliertes Signal (PWM) aus. Das PWM-Signal enthält die Information für die Größe des zu erzeugenden Drehmomentes zum Antrieb des Rotors von Motor M. Mit Hilfe der D/A-Wandlerschaltung 30 wird das PWM-Signal in ein analoges Signal (Regelspannung) umgewandelt und anschließend über die Signalleitung L1 dem Schaltwerk 16 sowie den parallelgeschalteten Eingängen E2 der Endstufen 11-13 zugeführt.

Bei Beendigung des Spielbetriebes stoppt der µP 40 die Ausgabe von Signalen an die D/A-Wandlerschaltung 30, so daß der Ausgang von D/A-Wandlerschaltung 30 auf sein Ruhepotential zurückfällt. Dies hat die Sperrung der Endstufen 11-13 zur Folge, so daß kein Drehmoment zum Antrieb des Rotors von Motor M mehr erzeugt wird. Der Motor M dreht aus. Ist der Motorstillstand erreicht, kann die Gabellichtschranke 50 keine Signale mehr erzeugen, so daß das zweite Schaltwerk 16 den Schaltverstärker 17 sperrt. Die Sperrung von Schaltverstärker 17 hat die Abschaltung von LED 52 und gleichzeitig die Wiedereinschaltung des Heizbetriebes zur Folge.

Fig. 4 zeigt eine Abwandlung der Schaltung gemäß Fig. 3.

Im Unterschied zu Schaltung gemäß Fig. 3 sind in den Schaltsignalwegen zu den Endstufen 11-13 elektronisch steuerbare Schalter 21-23 angeordnet.

Diese Schalter 21-23, die von Transistor 5 gesteuert werden, sind wechselweise zwischen Motor- und Heizbetrieb umschaltbar. Die Schalterstellung zeigt den Heizbetrieb. In dieser Schalterstellung sind die Steuereingänge E1 von dem Schaltsignale erzeugenden Schaltwerk 14 entkoppelt.

Über diese Schalter 21-23 ist den Steuereingängen E1 die Betriebsspannung +UB11 zuführbar, die dafür sorgt, daß sämtliche Endstufen 11-13 gleichzeitig Heizstrom erzeugen können.

Temperaturfühler 1 und Temperaturregler 2 lassen sich platzsparend zu einem Schaltkreis integrieren, der, zur Herstellung des entsprechenden Wärmekontaktes des Temperaturfühlers 1 mit den Wicklungssträngen U, V, W, z.B. in der in Fig. 2a beziehungsweise Fig. 2b erkennbaren Einbaulage von Temperaturfühler 1 angeordnet wird.

Darüber hinaus lassen sich Schalter 5 und die Dioden 6, 7 zusammen mit den Schaltern 21-23 oder (für die Schaltung gemäß Fig. 3) zusammen mit Impulsgenerator 18 und ODER-Schaltung 20 platzsparend in einen sogenannten Motorschaltkreis integrieren, z.B. von der Art des Motorschaltkreises U2560/Telefunken. Dieser Motorschaltkreis, der üblicher Weise auf der Motorleiterplatte angeordnet wird, enthält eine derartige Kommutierungsschaltung 10 zur elektronischen Kommutierung der Motorwicklungsstränge U, V, W und eine Schaltung für die in Fig. 3 beschriebene LED-Steuerung der Gabellichtschranke 50.

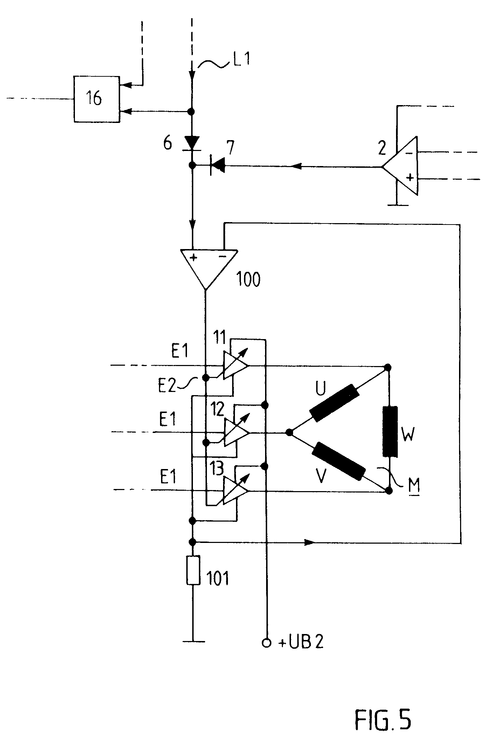

Fig. 3 und Fig. 4 zeigt die Ausführung der Erfindung anhand eines spannungsgesteuerten Motors M. Die Erfindung ist selbstverständlich in gleicher Weise auch bei stromgesteuerte Motoren anwendbar. Stromsteuerung von Motor M bedeutet in diesem Fall, daß die den Eingängen E2 steuerbarer Endstufen 11-13, z.B. bei Motorbetrieb, zugeführte Signalspannung von dem in den Wicklungssträngen U, V, W fließenden Strom und der Motorregelspannung bestimmt wird. Ein entsprechendes prinzipielles Schaltungsbeispiel zur Stromsteuerung von Motor M, sowohl bei Motor- als auch bei Heizbetrieb, zeigt Fig. 5. In Fig. 5 ist außerdem die Anwendung dieses Schaltungsbeispiels in einer Schaltung entsprechend Fig. 3 oder Fig. 4 angedeutet.

Der schaltungstechnische Unterschied in Bezug auf die Schaltungen gemäß Fig. 3 und Fig. 4 besteht im wesentlichen darin, daß zum einen den parallelgeschalteten Eingängen E2 der Endstufen 11-13 ein Differenzverstärker 100 vorgeschaltet ist, dessen nichtinvertierender Eingang mit dem Verbindungspunkt der beiden Dioden 6 und 7 verbunden ist und dessen invertierender Eingang mit dem in Fig. 3 und Fig. 4 an Masse liegenden Versorgungsanschluß der Endstufen 11-13 verbunden ist, und daß zum anderen dieser Versorgungsanschluß über einen Meßwiderstand 101 mit Masse verbunden ist. Mit Hilfe von Meßwiderstand 101 ist der bei Motorbetrieb oder bei Heizbetrieb in den Wicklungssträngen U, V, W jeweilig fließende Strom meßbar. Die sich dabei ergebende Meßgröße (Spannungsabfall an Meßwiderstand 101) wird dann an den die Endstufen 11-13 steuernden Differenzverstärker 100 zurückgeführt.

In dieser Schaltung wird das jeweilige den parallelgeschalteten Eingängen E2 der Endstufen 11-13 zugeführte Signal und damit die Größe des jeweiligen den Wicklungsstängen U, V, W zuzuführenden Stromes von der Spannung zwischen invertierenden und nichtinvertierenden Eingang von Differenzverstärker 100 bestimmt. Diese Spannung entspricht der Differenz zwischen Signalspannung am Verbindungspunkt beider Dioden 6, 7 und Meßgröße des in den Wicklungsträngen U, V, W fließenden Stromes.

Der Differenzverstärker 100 läßt sich ebenfalls platzsparend in den erwähnten Motorschaltkreis integrieren.

Die Erfindung ist bei Motoren mit beliebiger Anzahl von Wicklungsträngen anwendbar, wobei die Wicklungsstränge ihrerseits in beliebig viele Spulen unterteilt sein können. Außerdem ist die Anwendung der Erfindung keineswegs nur auf Motoren beschränkt, bei denen Wicklungsstränge nur im Stator angeordnet sind. Es ist auch denkbar, daß zum Antrieb derartiger Kopftrommeln auch Motoren verwendet werden, bei denen Wicklungsstränge im Rotor angeordnet sind. Die in diesen Wicklungssträngen erzeugte Wärme ist über die Motorachse an die Kopftrommel weiterleitbar.

Die Erfindung ist auch zur Beheizung der Kopftrommel von Camcordern und DAT-Recordern geeignet.

**Patentansprüche**

1. Magnetbandgerät mit einer drehbaren Kopftrommel (80; 90), die beheizbar und von einem mit ihr eine mechanische Einheit bildenden, elektronisch regelbaren Motor (M) antreibbar ist, der elektronisch kommutierbare Wicklungstränge (U; V; W) aufweist, **dadurch gekennzeichnet**, daß der ohmsche Widerstand des Wickeldrahtes der Wicklungsstränge (U; V; W) in den durch Motorstillstand gekennzeichneten Gerätebetriebsarten als Heizelement zur Beheizung der Kopftrommel (90) verwendet wird.

2. Gerät nach Anspruch 1, **dadurch gekennzeichnet**, daß sämtlichen Wicklungsträngen (U; V; W) oder einigen der Wicklungstränge (U; V; W) gleichzeitig ein Heizstrom zuführbar ist.

3. Gerät nach einem der Ansprüche 1 oder 2, **dadurch gekennzeichnet**, daß den Wicklungssträngen (U; V; W) als Verstärker ausgebildete, getrennte Steuereingänge (E1; E2) für Schaltsignale und Regelspannung aufweisende Kommutierungs-Endstufen (11-13) einer Kommutierungschaltung (10) zugeordnet sind, mittels welchen im Motorbetrieb Strom zur Drehmomenterzeugung und in den durch Motorstillstand gekennzeichneten Gerätebetriebsarten Strom zur Wärmeerzeugung erzeugbar ist.

4. Gerät nach einem der Ansprüche 1-3, **dadurch gekennzeichnet**, daß während der durch Motorstillstand gekennzeichneten Gerätebetriebsarten in vorgebbaren Zeitabständen Kommutierungen auslosbar sind, indem einem Schaltssignale erzeugenden Teil (14) der Kommutierungsschaltung (10) jeweils nach Ablauf einer beliebig vorgebbaren Zeitspanne ein Steuerimpuls (Is) zugeführt wird, wobei jeder dieser Steuerimpulse (Is) eine Kommutierung um jeweils einen Kommutierungsschritt zur Folge hat, so daß eine im Durchschnitt gleichmäßige Beteiligung der Wicklungsstränge (U; V; W) an der Wärmeerzeugung sowie eine gleichmäßige Verteilung der Wärmeerzeugung erreichbar ist.

5. Gerät nach einem der Ansprüche 1-4, **dadurch gekennzeichnet**, daß der Heizstrom für die Beheizung der Kopftrommel (90) einstellbar ist.

6. Gerät nach einem der Ansprüche 1-5, **dadurch gekennzeichnet**, daß zur Einstellung des Heizstromes ein Temperaturregler (2) verwendet wird, dessen Ausgangssignal zur Einstellung des Heizstromes den Motoregelspannungs-Steuereingängen (E2) der Endstufen (11-13) zuführbar ist, und daß mittels eines mit den Wicklungssträngen (U; V; W) in Wärmekontakt stehenden Temperaturfühlers (1) eine Temperatur-Regelgröße gewinnbar ist.

7. Gerät nach Anspruch 6, **dadurch gekennzeichnet**, daß in den durch Motorstillstand gekennzeichneten Gerätebetriebsarten der Temperaturregler (2) und der Temperaturfühler (1) sowie ein zur Gewinnung einer Führungsgröße (Uref) für die Temperaturregelung dienender Spannungsteiler (3; 4) über einen steuerbaren elektronischen Schalter (5) mit einer Betriebsspannung ( + UB11) versorgt werden.

8. Gerät nach Anspruch 7, **dadurch gekennzeichnet**, daß zur selbsttätigen Abschaltung der Betriebsspannungversorgung dem Steuereingang des elektronischen Schalter (5) eine in der Regelschaltung des Motors (M) erzeugbare Schaltspannung (Us) zuführbar ist, durch die ein Lichtemissionselement (52) einer mit dem Motor (M) mechanisch verkoppelten Lichtschranke (50) einschaltbar ist, die zur Gewinnung von Kommutierungssteuersignalen für die Kommutierungsfolge der Wicklungsstränge (U; V; W) des Motors (M) und/oder Regelgröße für die Regelung des Motors (M) dient und durch Einschaltung des Lichtemissionselementes (52) aktivierbar ist.

FIG.1
(bekannt)

FIG.2a

FIG.2b

FIG.3

**FIG.4**

FIG.5